# EUROPEAN PATENT SPECIFICATION

(11) **EP 0 497 912 B1**
(45) Date of publication and mention of the grant of the patent: **19.05.1999**
(21) Application number: 90917640.6
(22) Date of filing: 26.10.1990
(51) Int. Cl.: A61K 38/46

(54) **PROTECTION OF GROWING CROPS FROM PATHOGENS BY TREATMENT WITH ENZYMES**
SCHUTZ HERANWACHSENDER FELDFRÜCHTE VOR PATHOGENEN DURCH BEHANDLUNG MIT ENZYMEN
PROTECTION DES RECOLTES SUR PIED CONTRE DES PATHOGENES EN LES TRAITANT AVEC DES ENZYMES

(30) Priority: 27.10.1989 US 427879
(43) Date of publication of application: 12.08.1992
(73) Proprietor: GENENCOR INTERNATIONAL, INC., Rochester, New York 14618 (US)
(72) Inventor: KOLATTUKUDY, Pappachan, E., Columbus, OH 43220 (US); O'NEILL, Roger, A., San Carlos, CA 94070 (US); POULOSE, Ayrookaran, J., San Bruno, CA 94066 (US)
(74) Representative: Armitage, Ian Michael
(86) International application number: US9006086
(87) International publication number: WO9106313

(56) References cited:
- EP-A- 0 184 288
- EP-A- 0 272 002
- WO-A-90/03732
- WO-A-91/18512
- US-A- 3 911 110
- US-A- 4 762 547
- US-A- 4 891 096
- PLANT PHYSIOLOGY vol. 74, no. 1, 1984, BETHESDA, MD pages 52 - 60; K.R.DAVIS ET AL.: 'Host-Pathogen Interactions. XXV. Endopolygalacturonic acid lyase from Erwinia carotovora elicits phytoalexin accumulation by releasing plant cell wall fragments.'
- SCIENTIFIC AMERICAN. vol. 253, no. 3, 1985, NEW YORK US pages 44 - 50; P.ALBERSHEIMER ET AL.: 'Oligosaccharins'
- CHEMICAL ABSTRACTS, vol. 110, no. 13, 27 March 1989, Columbus, Ohio, US; abstract no. 111915M, D.ROBY ET AL.: 'Systemic induction of chitinase activity and resistance in melon plants upon fungal infection or elicitor treatment.' page 431; column 2; & PHYSIOL. MOL. PLANT PATHOL. vol. 33, no. 3, 1988, pages 409-417
- CHEMICAL ABSTRACTS, vol. 104, no. 15, 14 April 1986, Columbus, Ohio, US; abstract no. 126732Z, K.R.DAVIS ET AL.: 'Host-pathogen interactions. XXXI. Several biotic and abiotic elicitors act synergistically in the induction of phytoalexin accumulation in soybean.' page 414; column 1; PLANT MOL. BIOL. vol. 6,no. 1, 1986, pages 23-32

## Description

### FIELD OF THE INVENTION

The present invention relates to protection of crops and, more particularly, to methods and compositions for protecting crops from pathogens utilizing each crop's own natural defense system.

### BACKGROUND OF THE INVENTION

Over the years various techniques have been developed for protecting growing crops from attacks by various pathogens. Generally, the approach taken has been to apply to the crops various synthetic and naturally derived fungicides, bactericides and anti-viral agents (anti-pathogenic agents) which protect the crop from being infected without otherwise deleteriously affecting the growth and ultimate harvesting of the crop. While many such compositions are effective, there has nonetheless been a growing concern among consumers in the recent past as to the potential harmful side effects of chemical anti-pathogenic agents. This, in turn, has led to an increasing interest among both food producers and food vendors for compositions of natural origin, which are far less likely to cause adverse aide effects and which would be more acceptable to the growing number of concerned consumers.

As discussed by Abersheim et al., "Oligosaccharins", Scientific American, volume 253(3) September 1985, plants themselves are known to produce compounds which increase their resistance to pathogens. More specifically, plants are now known to contain regulatory molecules called oligosaccharins which, when in active form, appear to deliver a message regulating a particular plant function including defense against disease as well as regulation of morphogenetic pathways. Such oligosaccharins are fragments of the cell wall which are released from the cell wall by enzymes, there being different oligosaccharins released by different enzymes. Once released, the oligosaccharins, which appear to be highly specific, are recognized by the plant and stimulate plant tissue to synthesize antibiotics. The enzymes which cause the release of the oligosaccharins from the cell wall can originate from an invading organism such as a fungus, bacterium or virus or from the cells of the plant itself, such as when such cells have been damaged.

For example, as reported by Davis et al. in "Host-Pathogen Interactions", Plant Physiology, Volume 74, pp. 52-60 (1984), it is known that plants, when invaded by potentially pathogenic microorganisms, can accumulate at the site of infection phytoalexins which are antimicrobial compounds of low molecular weight. Such phytoalexin accumulation is in fact induced by oligosaccharins of microbial origin called elicitors. Compounds which cause release of such oligosaccharin elicitors from cell walls that have been isolated include fungal cell wall glucans and several fungal glycoproteins including a fungal endopolygalacturonase. Elicitors, e.g., pectic oligogalacturonides, have also been released from soybean cell walls by acid hydrolysis. Similar oligogalacturonide elicitors solubilized from cell walls, called endogenous elicitors, have been obtained by partial acid hydrolysis of the walls of suspension-cultured tobacco, sycamore, and wheat cells and from citrus pectin.

It is further known that heat-labile elicitors can be produced by E. caratovora grown on a defined medium containing citrus pectin. These elicitors were released using the enzymes α-1,4-endopolygalacturonic acid lyases (PGA), which are pectin-degrading enzymes that have been shown to be secreted by many plant pathogens. Evidence is also present to the effect that release of oligosaccharides from the pectic polymers of plant cell walls by the PGA triggers the elicitation of phytoalexin accumulation. This evidence further suggests that the release of endogenous elicitors from plant cell walls by pectin-degrading enzymes plays a role in general plant disease resistance to microorganisms.

It has further been reported by Davis et al, "Host Pathogen Interactions XXXI" Plant Molecular Biology, Vol. 6, pp. 23-32 (1986) that phytoalexin accumulation can be induced in vitro by abiotic and biotic elicitors. Abiotic elicitors include detergents and heavy metal salts, such as HgCl₂. Biotic elicitors include a variety of compounds isolated from microorganisms and plant tissues. It was found that, in the induction of phytoalexin accumulation in soybean cotyledons, a hexa-β-glucosyl glucitol elicitor acts synergistically with either the deca-α-1,4-D-galacturonide elicitor or PGA lyase, an enzyme that releases the decagalacturonide from pectic polysaccharides. Dilute organic-acid buffers were also found to enhance the elicitor activity of the hexa-β-glucosyl glucitols.

It has also been shown that oligosaccharides produced from fungal cell walls can elicit phytoalexin and chitinase accumulation. Hadwiger, L.A., and Beckman, J.M. "Chitosan as a Component of Pea Fusarium Solani Interactions" Plant Physiol. 66; 205-211 (1980); Kendra, D.F. and Hadwiger, L.A. "Characterization of the Smallest Chitosan Oligomer that is Maximally Antifungal to Fusarium Solani and Elicits Pisatin Formation in Pisum Sativum" Exp. Mycol., 8: 276-281 (1984); Roby, D., Gadelle, A., and Toppan, A. "Chitin Oligosaccharides as Elicitors of Chitinase Activity in Melon Plants" Biochem. Biopys. Res. Comm. 143: 885-892 (1987). The active oligosaccharides include those of chitin, a β-1,4-linked polymer of N-acetyl glucosamine, and chitosan, a closely related material composed of β-1,4-linked glucosamine residues. Both the phytoalexins and chitinases elicited by these materials can be antifungal. The β-glucan elicitors, which are among the most potent biotic elicitors, have been characterized by Sharp, J., Valent, B., and Albersheim, P. "Purification and Partial Characterization of a β-Glucan Fragment That Elicits Phytoalexin Accumulation in Soybean" J. Biol. Chem. 259: 11312-11320 (1984). (See related Sharp et al.: J. Biol. Chem. 259: 11321-11326 and 11341-11345).

While the above-described natural defenses elicited on growing crops by the presence of pathogenic agents is theoretically interesting, it is nonetheless a practical reality that, by the time the cell material of a growing crop produces the much needed anti-pathogenic agent, the growth of the pathogen has often advanced to the point where such anti-pathogenic agents are of little effect.

While oligosaccharin elicitors have been applied to plants in an attempt to "trick" a plant into producing anti-pathogenic agents, i.e., by contacting such plants with oligosaccharins, such attempts have, with the exception of application of elicitors at wound sites, been unsuccessful thereby leading one to conclude that it is not merely the presence of the elicitors generated by pathogens which elicits the anti-pathogenic response by the plant. Thus, while theoretically interesting, there has thus far been little practical application of the above-described plant protection mechanisms since the time period between the initial elicitation of anti-pathogenic agents by a pathogen and the actual production of meaningful quantities of such anti-pathogenic agent is often too long for such anti-pathogenic agents to be effective.

### SUMMARY AND OBJECTS OF THE INVENTION

In view of the foregoing limitations and shortcomings of the prior art methods of protecting growing crops from pathogens, as well as other disadvantages not specifically mentioned above, it is apparent that there still exists a need in the art for a method and composition for protecting a growing crop from pathogens which does not require the application thereto of potentially harmful chemicals. It is, therefore, a primary objective of the present invention to fulfill that need by providing a technique for protecting a growing crop from pathogens which makes use of anti-pathogenic agents derived from the crop itself. More particularly, it is an object of the present invention to provide techniques, compositions and methods for protecting a growing crop from pathogens by the application to that crop of a compound capable of causing anti-pathogenic agents to be produced by the crop itself before a pathogen causes the production of the anti-pathogenic agents, thereby protecting the crop better from attack or damage from the pathogen.

It is a further object of the present invention to provide a technique for protecting a growing crop from pathogens wherein the anti-pathogenic agents produced by the growing crop are elicited independently of the pathogens themselves thereby eliminating the unduly long lag times between attack by a pathogen and production of an effective amount of anti-pathogenic agent.

It is a further object of the present invention to provide a technique for protecting a growing crop from pathogens wherein the anti-pathogenic agents produced by the growing crop are elicited by materials released from the cell walls of pathogens present on the crop prior to a time that those materials would normally be released from the pathogens present. Thus, the early release of the materials from the pathogens cause the crop to produce anti-pathogenic agents earlier than would normally occur, thereby reducing or eliminating the lag time between when the pathogen may attack the crop and the production of an effective amount of anti-pathogenic agents by the crop to protect itself from the pathogen.

In a first aspect, the present invention comprises a method for protecting a growing crop from pathogens comprising applying to the crop a compound capable of generating an elicitor which stimulates the crop to synthesize anti-pathogenic agents the compound being derived from a source other than a pathogen growing on the crop and the elicitor being generated in situ from the crop or from the pathogen tissue in an amount effective to elicit production of an anti-pathogenic agent by the crop.

In one embodiment of the first aspect, the invention comprises a method for protecting a growing crop from pathogens wherein the compound capable of generating an elicitor, such as chitinase, chitosanase or endo β-glucanase, is applied to the crop to generate active oligosaccharides, such as β-glucans, chitosan and chitin oligosaccharides, from cell walls of an invading pathogen present on the crop, the oligosaccharides contacting the plant to produce a localized anti-pathogenic response.

In one aspect, the present invention provides a method for protecting a growing crop from pathogens comprising applying to said growing crop a composition comprising:
(a) a compound capable of generating in said crop or in a pathogen present on said crop an elicitor which stimulates said crop to synthesize anti-pathogenic agents, and
(b) a penetrating agent capable of assisting said compound in penetrating into the cuticle layer of said crop or pathogen;
   said compound comprising an endoenzyme derived from a source other than a pathogen growing on said crop and applied to said crop in an amount effective to cause said elicitor to be generated in situ in an amount effective to elicit production of an anti-pathogenic agent by the crop.

In another aspect, the present invention relates to a composition for application to a growing crop to protect said growing crop from pathogens comprising:
(a) a compound capable of generating in said crop or in a pathogen present on said crop an elicitor which stimulates said crop to synthesize anti-pathogenic agents;
(b) a penetrating agent capable of assisting said compound in penetrating into the cuticle layer of said crop;
   said compound comprising an endoenzyme derived from a source other than a pathogen growing on said crop and present in an amount effective to cause said elicitor to be generated in situ in an amount effective to elicit production of an anti-pathogenic agent by the crop.

In another aspect, the present invention relates to a growing crop protected from pathogenic attack comprising said crop having a composition on a surface of said crop comprising:
(a) a compound capable of generating in said crop or in a pathogen present on said crop an elicitor which stimulates said crop to synthesize anti-pathogenic agents, and
(b) a penetrating agent capable of assisting said compound in penetrating into the cuticle layer of said crop or pathogen;
   said compound comprising an endoenzyme derived from a source other than a pathogen growing on said crop and present in an amount effective to cause said elicitor to be generated in situ in an amount effective to elicit production of an anti-pathogenic agent by the crop.

With the foregoing and other objects, advantages, and features of the invention that will become hereinafter apparent, the nature of the invention may be more clearly understood by reference to the following detailed description of the invention and to the appended claims.

### DESCRIPTION OF PREFERRED EMBODIMENTS

The "compounds capable of generating an elicitor" which are applied to the harvested crop according to this invention, are typically endoenzymes and similar compounds which cause the crop or an invading pathogen to release active oligomer elicitors, such as oligosaccharins, oligogalacturonides, β-glucans, chitins, chitosan, etc., from the cell walls of the crop or the pathogens present on the crop. The endo-compounds are useful in the present invention because, it is believed, they produce active oligomers from the crop or pathogen tissue or cell materials, which oligomers are active as elicitors.

The compounds effective against pathogens which are elicited by the elicitors and produced by the crop are referred to as "anti-pathogenic agents."

The compounds capable of generating elicitors in crops can be derived from fungi, bacteria, viruses, or from the harvested crop itself. When the crop involves a food product, the compounds must be recognized as being safe for application to fields and, of course, for application to food products. Included among such compounds are endoenzymes such as endocarbohydrases or endolyases which produce active oligomers by breaking up polysaccharide chains at various points along the length of the chain (as opposed to exoenzymes which act only at the end of the chain). Among the endoenzymes, endoglycanases are preferred such as endopolygalacturonase and pectate lyase, pectin lyase, β-glucanase, chitinase, and chitosanase. Particularly preferred are the endoglycanases. Also, especially preferred are endopolygalacturonases such as those prepared from the fungi Fusarium monniliforme and Aspergillus niger.

The "penetrating agent" component of the composition of this invention can be any material which causes or assists said elicitor-generating compound to enter the cuticle layer of the growing crop or a pathogen present on the growing crop. In those compositions wherein said compound is an enzyme which is itself capable of entering or passing through the cuticle layer of the crop, the penetrating agent used will be a surfactant, a humectant, or other material which aids in the efficient contact of said compound with the cuticle layer and causes the entry of said compound into the cuticle layer to be faster or more efficacious. In those compositions wherein said compound is not itself capable of penetrating the cuticle layer in a reasonable manner or in a reasonable amount of time, the penetrating agent used usually will be a cutinase, wax esterase, or exoenzyme which is capable of entering or penetrating the cuticle layer faster or more efficiently than said compound and which will aid or speed the entry of said compound into the cuticle layer of the crop or the pathogen. In some cases it may be desirable to use such a penetrating agent in order to preserve the activity of said compound so that it will still be capable of generating the desired elicitors once it has entered the cuticle layer of the crop. When the penetrating agent is an enzyme, the composition can also comprise other useful components such as a surfactant, humectant or the like to further enhance the efficiency of the practice of this invention. As will be recognized the penetrating agent may also function to aid the entry of an elicitor into the cuticle layer of the growing crop where the elicitor is generated by said compound in a pathogen present on the growing crop and the elicitor then transfers from the pathogen to the growing crop thereby causing production of phytoalexins in the crop. Appropriate penetrating agents may also be selected from the materials known in the art as "adjuvants" for agricultural chemicals, for example from the adjuvants disclosed in copending application Serial No. 07/112,108, filed October 19, 1987.

The compositions of this invention will typically contain additional components known to be useful for applying materials to growing crops, such as one or more carrier materials, buffer materials for pH control, and the like. Water will often be used as a carrier, but other conventional carriers may also be used.

It should be understood that when a composition and method of this invention are employed, the composition is applied to the growing crop and to any pathogen which may be present on the surface of the growing crop. The composition of this invention can generate an elicitor from the crop or from the pathogen, whereby the elicitor enters the crop and causes production of anti-pathogenic agents. Thus, the compounds for use in this invention can be selected and formulated to generate the elicitors desired for particular anti-pathogenic agent production. In some cases it will be desirable to generate the elicitor or elicitors in the crop itself in order to cause certain anti-pathogenic agents to be produced to protect the crop from pathogen attack. In other cases it will be desirable to generate the elicitor in the pathogen present on the growing crop and cause that elicitor to enter the crop in order to cause production of specific anti-pathogenic agents to protect the crop against attack from that particular pathogen. This can be timed to cause the crop to produce its anti-pathogenic agents well in advance of when the crop would have normally been induced to do so by the actual attack of the crop by the pathogen. Thus, by the time the pathogen is mature enough or reaches its life cycle point where it attacks the crop, the crop is already protected against the attack, whereas normally the crop is not stimulated to produce the anti-pathogenic agents until attacked by the pathogen and then cannot produce those agents rapidly enough to protect itself.

In general, the compositions of this invention are applied to the growing crops in accordance with techniques well known to persons skilled in the art such as in the form of a spray prepared by mixing the enzyme compound and penetrating agent into a suitable carrier such as a buffer solution. A buffer is preferably employed in view of the fact that enzymes are typically quite pH sensitive and thus, are desirably protected from potentially damaging variations in pH. It will be appreciated, however, that it is possible that the natural pH of a crop being treated, which is typically acidic, will be within the acceptable pH range of the enzyme being applied thereto. In such instances, a buffer may not be required. A surfactant is usually employed in order to wet the surface of the crop to thereby obtain exposure of the crop to the enzyme. Typically, the amount of active enzyme compound in the total composition including the carrier is between about 1 and about 1000 µg/ml, although amounts outside such range might also be acceptable, depending upon the compound being employed and the crop being treated. The amount of the surfactant required is readily ascertainable by persons skilled in the art and will typically range from between about 0.001 and about 0.1 % by weight based on the weight of the carrier. It should be noted that, while the compositions of this invention are primarily described as intended for use on growing crops, the compositions of this invention will also find utility on harvested crops as well.

Where pH regulation is not important, such as where the natural pH of the crop corresponds to the pH at which the applied compound is active, water may serve as the carrier. Where a buffer is employed, there may be used any buffer solution which is compatible with the enzyme and does not otherwise deleteriously affect the crop. Of course, the buffer must also be a material which is known to be safely used with a foodstuff. Suitable buffers include, for example, a 5-50 mM solution of sodium succinate or sodium citrate. As the surfactant, there can be employed, once again, compounds which are compatible with the enzymes being applied, do not otherwise deleteriously affect the crop being treated and are safely used with a foodstuff. Suitable surfactants include, but are not limited to Tween-80 and Triton-X-100.

The above-described formulations, containing the compound capable of generating an elicitor in the crop or in a pathogen present on the crop, the penetrating agent, and, if desired, a surfactant in a suitable carrier are then applied to the growing crop. Application of the formulation can be carried out in accordance with techniques well known to persons skilled in the art such as by preparing a spray for application to the growing crop. It will be appreciated that the amount of solution required for treatment of the crop will depend on the particular crop being treated. Such amount is one which is readily ascertained by a person skilled in the art.

It is noted that the formulations of the invention can prevent pathogenic attack, e.g., fungal, bacterial, or viral attack on a crop. This is accomplished as mentioned above by causing the crop to produce anti-pathogenic agents in advance of actual attack upon the crop by a pathogen, so that when the pathogenic attack does occur, the plant is prepared, either by an immune response or otherwise.

Upon application of the formulations of the invention to a growing crop, elicitors are generated in the crop or in a pathogen present on the crop. It is noted that in addition to oligosaccharins such as oligogalacturonides, the compounds of the invention might generate other elicitors present in the cellular material of the crop. Furthermore, such elicitors can elicit production of a number of anti-pathogenic agents including, but not limited to, phytoalexins, chitinase, beta-1,3-glucanase and various proteinase inhibitors.

The following are examples of preferred embodiments of the compositions of this invention.

### Example I

- Endopolygalctuonase: 20 µg/ml
- Buffer: 10 mM sodium phosphate pH 7.0
- Cutinase: 20 µg/ml
- Triton X-100: 0.05% wt/vol

### Example II

- Pectin lyase: 20 µg/ml
- Cutinase: 20 µg/ml
- Buffer: 10mM sodium phosphate 7.0
- Triton X-100: 0.05% wt/vol

### Example III

- Pectate lyase: 20 µg/ml
- Cutinase: 20 µg/ml
- Buffer: 10mM sodium phosphate pH 7.0
- Triton X-100: 0.05% wt/vol

### Example IV

- B-glucanase: 50 µg/ml
- Cutinase: 20 µg/ml
- Buffer: 10mM sodium phosphate pH 7.0
- Triton X-100: 0.05% wt/vol

### Example V

- Chitinase: 50 µg/ml
- Cutinase: 20 µg/ml
- Buffer: 10mM sodium phosphate 7.0
- Triton X-100: 0.05% wt/vol

### Example VI

- Chitosanase: 50 µg/ml
- Cutinase: 20 µg/ml
- Buffer: 10mM sodium phosphate 7.0
- Triton X-100: 0.05% wt/vol

### Example VII

- Pectin lyase: 50 µg/ml
- Buffer: 10mM sodium succinate pH 5.2
- Triton X-100: 0.1% wt/vol

### Example VIII

- Endopolgalaturonase: 50 µg/ml
- Buffer: 10mM sodium succinate pH 5.2
- Triton X-100: 0.1% wt/vol

### Example IX

- Pectate lyase: 50 µg/ml
- β-glucanase: 50 µg/ml
- Chitinase: 50 µg/ml
- Cutinase: 20 µg/ml
- Triton X-100: 0.05% wt/vol
- Buffer: 10mM sodium phosphate pH 7.0

In a preferred aspect of the method of this invention, it is desired to spray the crop before or at the first sign of the presence of pathogen or of the infection of the crop by pathogen. A desired application rate is at 40 gal/acre. It may be desired in many crops to repeat the treatment after two weeks if necessary to proavide the desired protection from the pathogens present on the crop.

The following is a list of crops and corresponding diseases and organisms which can be controlled in accordance with the present invention.

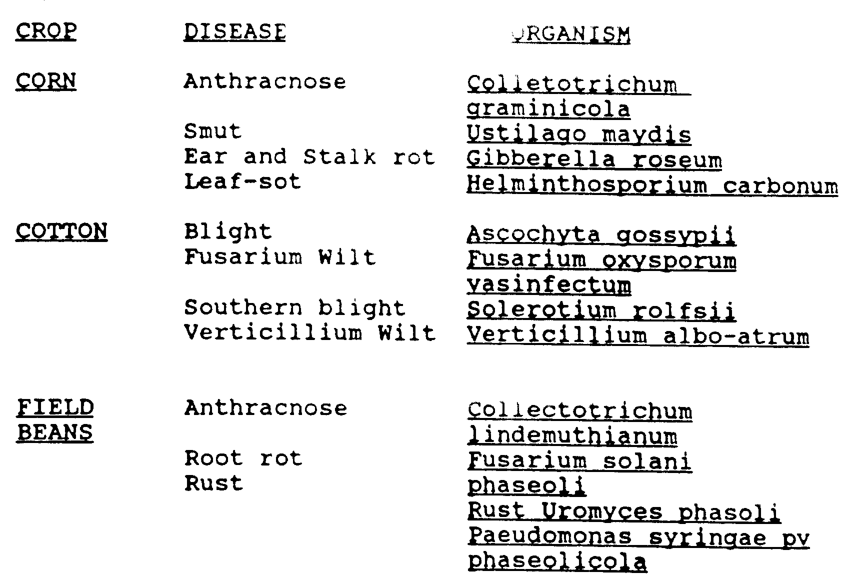

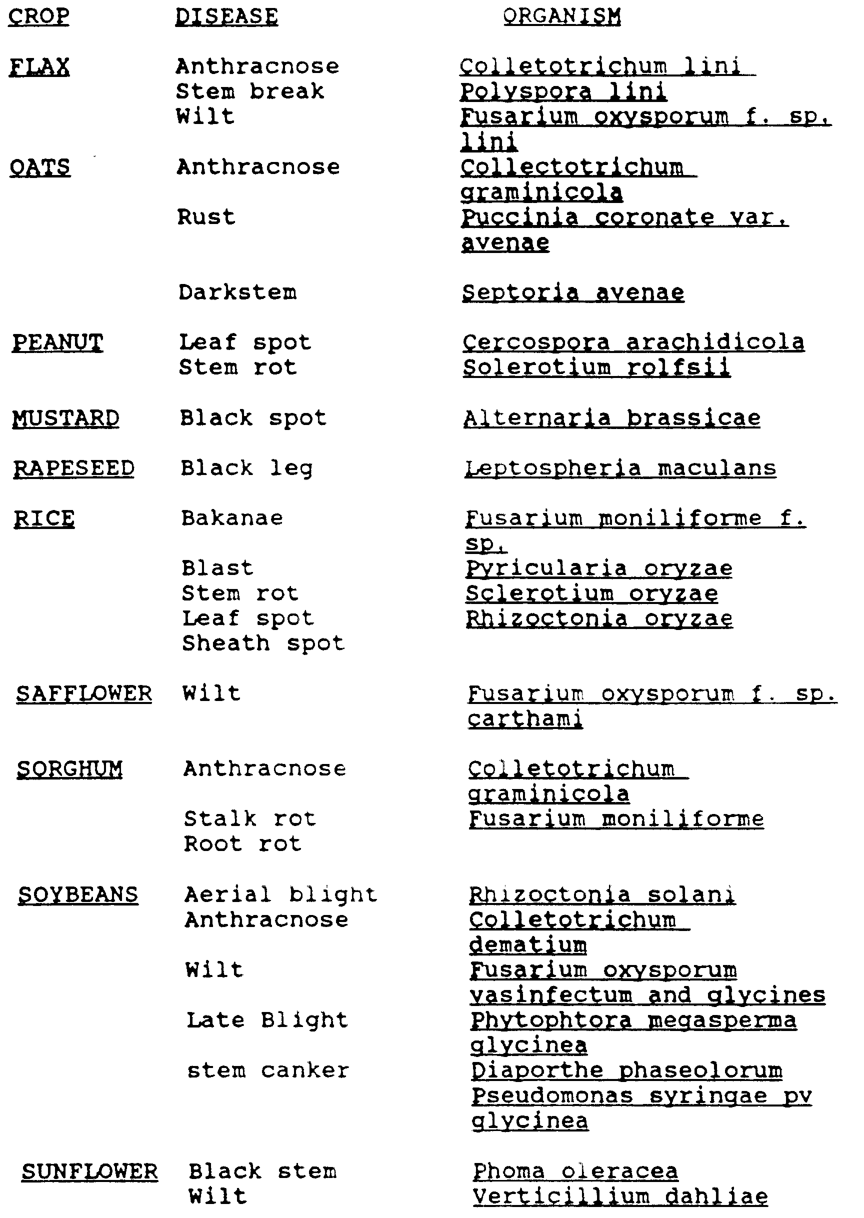

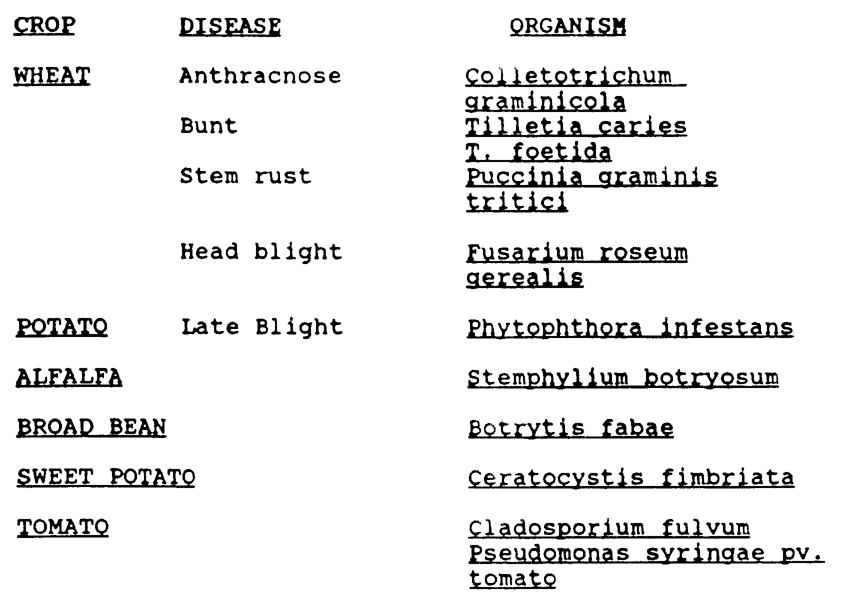

## Claims

1. Use of a compound comprising an endoenzyme in combination with a penetrating agent to penetrate the cuticle layer of a growing crop and generate an elicitor which stimulates said crop to produce anti-pathogenic agents for the protection of a growing crop from pathogens; characterised in that said endoenzyme is derived from a source other than a pathogen growing on said crop and is applied to said crop in an amount effective to cause said elicitor to be generated in situ in an amount effective to elicit production of said anti-pathogenic agents by said growing crop.

2. Use according to claim 1 wherein the endoenzyme comprises an endopolygalacturonase, pectate lyase, pectin lyase, β-gluconase, endoglycanase, endocarbohydrase, endolyase, chitinase or a chitosanase.

3. Use according to claim 1 or claim 2 wherein said penetrating agent comprises a surfactant, a humectant, an exoenzyme, a cutinase or a wax esterase.

4. Use according to any one of claims 1 to 3 wherein said elicitor is an oligosaccharin.

5. Use according to any one of claims 1 to 4 wherein said compound is applied to the crop in a composition which comprises a buffer.

6. Use according to any one of claims 1 to 5 wherein said compound is applied to the crop in a composition which comprises 10-1000µg/ml of said compound.

7. Use according to any one of claims 1 to 6 wherein said endoenzyme comprises an endoglycanase.

8. Use according to any one of claims 1 to 6 wherein said endoenzyme comprises an endocarbohydrase or endolyase.

9. Use according to any one of claims 1 to 6 wherein said endoenzyme comprises an endopolygalacturonase.

10. Use according to any one of claims 1 to 9 wherein said compound applied to said crop generates an active oligosaccharide from cell walls of an invading pathogen present on said crop, said oligosaccharide contacting the said crop to produce an anti-pathogenic response in said crop.

11. Use according to claim 10 wherein said active oligosaccharide is chitosan or chitin oligosaccharide.

12. Use according to any one of claims 1 to 11 wherein said compound is applied to the crop in a composition comprising a carrier.

13. A composition for application to a crop to protect said crop from pathogens, said composition comprising (i) a compound capable of generating in said crop or in a pathogen on said crop an elicitor which stimulates said crop to synthesise anti-pathogenic agents; said compound comprising an endoenzyme from a source other than a said pathogen growing on said crop and selected from the group consisting of: endopolygalacturonase, pectin lyase, pectate lyase, β-gluconase, endoglycanase, endocarbohydrase, endolyase, chitinase and chitosanase, the endoenzyme being present in an amount effective to cause said elicitor to be generated in situ in an amount effective to elicit production of anti-pathogenic agent by the crop; and (ii) an enzymic penetrating agent capable of assisting said compound in penetrating into the cuticle layer of said crop.

14. A composition according to claim 13 wherein the enzymic penetrating agent comprises an enzyme selected from cutinase or wax esterase.

15. A composition according to claim 14 wherein the enzyme is cutinase.

16. A method for protecting a growing crop from pathogens comprising applying to said crop a composition comprising:
(a) a compound capable of generating in said crop an elicitor which stimulates said crop to synthesise anti-pathogenic agents, and
(b) a penetrating agent to penetrate into the cuticle layer of said crop;
said compound comprising an endoenzyme derived from a source other than a pathogen growing on said crop and applied to said crop in an amount effective to cause said elicitor to be generated in situ in an amount effective to elicit production of an anti-pathogenic agent by the crop.

17. A method according to claim 16 wherein the endoenzyme comprises and endopolygalacturonase, pectate lyase, pectin lyase, β-gluconase, endoglycanase, endocarbohydrase, endolyase, chitinase or a chitosanase.

18. A method according to claim 16 or claim 17 wherein said penetrating agent comprises a surfactant, a humectant, an exoenzyme, a cutinase or a wax esterase.

19. A method according to any one of claims 16 to 18 wherein said elicitor is an oligosaccharin.

20. A method according to any one of claims 16 to 19 wherein said compound is applied to the crop in a composition which comprises a buffer.

21. A method according to any one of claims 16 to 20 wherein said compound is applied to the crop in a composition which comprises 10-1000 µg/ml of said compound.

22. A method according to any one of claims 16 to 21 wherein said endoenzyme comprises an endoglycanase.

23. A method according to any one of claims 16 to 21 wherein said endoenzyme comprises an endocarbohydrase or endolyase.

24. A method according to any one claims of 16 to 21 wherein said endoenzyme comprises an endopolygalacturonase.

25. A method according to any one of claims 16 to 23 wherein said compound applied to said crop generates an active oligosaccharide from cell walls of an invading pathogen present on said crop, said oligosaccharide contacting the said crop to produce an anti-pathogenic response in said crop.

26. A method according to claim 24 wherein said active oligosaccharide is chitosan or chitin oligosaccharide.

27. A method according to any one of claims 16 to 25 wherein said compound is applied to the crop in a composition comprising a carrier.

## Patentansprüche

1. Verwendung einer Verbindung, umfassend ein Endoenzym, in Verbindung mit einem Penetriermittel, um die Kutikula-Schicht einer wachsenden Feldfrucht zu durchdringen und einen Elicitor zu erzeugen, der die Feldfrucht dazu stimuliert, antipathogene Mittel für den Schutz einer wachsenden Feldfrucht vor Pathogenen zu erzeugen, dadurch gekennzeichnet, daß das Endoenzym von einer anderen Quelle als einem Pathogen, das auf der Feldfrucht wächst, abgeleitet ist und in einer wirksamen Menge auf die Feldfrucht aufgebracht wird, so daß verursacht wird, daß der Elicitor in situ in einer wirksamen Menge erzeugt wird, um eine Produktion der antipathogenen Mittel durch die wachsende Feldfrucht auszulösen.

2. Verwendung nach Anspruch 1, wobei das Endoenzym eine Endopolygalacturonase, Pektatlyase, Pektinlyase, β-Gluconase, Endoglycanase, Endocarbohydrase, Endolyase, Chitinase oder eine Chitosanase umfaßt.

3. Verwendung nach Anspruch 1 oder Anspruch 2, wobei das Penetriermittel ein grenzflächenaktives Mittel, ein Benetzungsmittel, ein Exoenzym, eine Kutinase oder eine Wachsesterase umfaßt.

4. Verwendung nach einem der Ansprüche 1 bis 3, wobei der Elicitor ein Oligosaccharin ist.

5. Verwendung nach einem der Ansprüche 1 bis 4, wobei die Verbindung auf die Feldfrucht in einer einen Puffer enthaltenden Zusammensetzung aufgebracht wird.

6. Verwendung nach einem der Ansprüche 1 bis 5, wobei die Verbindung in einer Zusammensetzung, umfassend 10 - 1000 µg/ml der Verbindung, auf die Feldfrucht aufgebracht wird.

7. Verwendung nach einem der Ansprüche 1 bis 6, wobei das Endoenzym eine Endoglycanase umfaßt.

8. Verwendung nach einem der Ansprüche 1 bis 6, wobei das Endoenzym eine Endocarbohydrase oder Endolyase umfaßt.

9. Verwendung nach einem der Ansprüche 1 bis 6, wobei das Endoenzym eine Endopolygalacturonase umfaßt.

10. Verwendung nach einem der Ansprüche 1 bis 9, wobei die auf die Feldfrucht aufgebrachte Verbindung ein aktives Oligosaccharid von Zellwänden eines eindringenden Pathogens, das auf der Feldfrucht anwesend ist, erzeugt, wobei das Oligosaccharid mit der Feldfrucht in Berührung kommt, um eine antipathogene Antwort in der Feldfrucht zu erzeugen.

11. Verwendung nach Anspruch 10, wobei das aktive Oligosaccharid Chitosan- oder Chitin-Oligosaccharid ist.

12. Verwendung nach einem der Ansprüche 1 bis 11, wobei die Verbindung auf die Feldfrucht in einer Zusammensetzung aufgebracht wird, die einen Träger umfaßt.

13. Zusammensetzung zum Aufbringen auf eine Feldfrucht, um die Feldfrucht vor Pathogenen zu schützen, wobei die Zusammensetzung umfaßt:
(i) eine Verbindung, die in der Lage ist, in der Feldfrucht oder in einem Pathogen auf der Feldfrucht einen Elicitor zu erzeugen, der die Feldfrucht stimuliert, antipathogene Mittel zu synthetisieren, wobei die Verbindung ein Endoenzym aus einer anderen Quelle als dem Pathogen, das auf der Feldfrucht wächst, umfaßt und ausgewählt ist aus der Gruppe, bestehend aus : Endopolygalacturonase, Pektinlyase, Pektatlyase, β-Gluconase, Endoglycanase, Endocarbohydrase, Endolyase, Chitinase und Chitosanase, wobei das Endoenzym in einer Menge vorliegt, die wirksam ist, zu verursachen, daß der Elicitor in situ in einer wirksamen Menge erzeugt wird, um eine Produktion von antipathogenem Mittel durch die Feldfrucht auszulösen, und (ii) ein enzymatisches Penetriermittel, das in der Lage ist, die Verbindung darin zu unterstützen, in die Kutikula-Schicht der Feldfrucht einzudringen

14. Zusammensetzung nach Anspruch 13, wobei das enzymatische Penetriermittel ein Enzym, ausgewählt aus Kutinase oder Wachsesterase, umfaßt.

15. Zusammensetzung nach Anspruch 14, wobei das Enzym Kutinase ist.

16. Verfahren zum Schützen einer wachsenden Feldfrucht vor Pathogenen, welches umfaßt, auf die Feldfrucht eine Zusammensetzung aufzubringen, umfassend:
(a) eine Verbindung, die in der Lage ist, in der Feldfrucht einen Elicitor zu erzeugen, der die Feldfrucht stimuliert, antipathogene Mittel zu synthetisieren, und
(b) ein Penetriermittel, um in die Kutikula-Schicht der Feldfrucht einzudringen,
wobei die Verbindung ein Endoenzym umfaßt, das von einer anderen Quelle als einem Pathogen, das auf der Feldfrucht wächst, abgeleitet ist und auf die Feldfrucht in einer wirksamen Menge aufgebracht wird, so daß verursacht wird, daß der Elicitor in situ in einer wirksamen Menge erzeugt wird, um eine Produktion eines antipathogenen Mittels durch die Feldfrucht auszulösen.

17. Verfahren nach Anspruch 16, wobei das Endoenzym umfaßt und Endopolygalacturonase, Pektatlyase, Pektinlyase, β-Gluconase, Endoglycanase, Endocarbohydrase, Endolyase, Chitinase oder eine Chitosanase.

18. Verfahren nach Anspruch 16 oder Anspruch 17, wobei das Penetriermittel ein grenzflächenaktives Mittel, ein Benetzungsmittel, ein Exoenzym, eine Kutinase oder eine Wachsesterase umfaßt.

19. Verfahren nach einem der Ansprüche 16 bis 18, wobei der Elicitor ein Oligosaccharin ist.

20. Verfahren nach einem der Ansprüche 16 bis 19, wobei die Verbindung auf die Feldfrucht in einer Zusammensetzung, die einen Puffer umfaßt, aufgebracht wird.

21. Verfahren nach einem der Ansprüche 16 bis 20, wobei die Verbindung in einer Zusammensetzung, die 10 - 1000 µg/ml der Verbindung umfaßt, auf die Feldfrucht aufgebracht wird.

22. Verfahren nach einem der Ansprüche 16 bis 21, wobei das Endoenzym eine Endoglycanase umfaßt.

23. Verfahren nach einem der Ansprüche 16 bis 21, wobei das Endoenzym eine Endocarbohydrase oder Endolyase umfaßt.

24. Verfahren nach einem der Ansprüche 16 bis 21, wobei das Endoenzym eine Endopolygalacturonase umfaßt.

25. Verfahren nach einem der Ansprüche 16 bis 23, wobei die auf die Feldfrucht aufgebrachte Verbindung ein aktives Oligosaccharid von Zellwänden eines eindringenden Pathogens, das auf der Feldfrucht anwesend ist, erzeugt, wobei das Oligosaccharid mit der Feldfrucht in Berührung kommt, um eine antipathogene Antwort in der Feldfrucht zu erzeugen.

26. Verfahren nach Anspruch 24, wobei das aktive Oligosaccharid Chitosan- oder Chitin-Oligosaccharid ist.

27. Verfahren nach einem der Ansprüche 16 bis 25, wobei die Verbindung auf die Feldfrucht in einer Zusammensetzung, die einen Träger umfaßt, aufgebracht wird.

## Revendications

1. Utilisation d'un composé contenant une endoenzyme en combinaison avec un agent de pénétration, afin de traverser la couche épidermique d'une récolte coupée et générer un déclencheur stimulant ladite récolte coupée pour qu'elle produise des agents antipathogènes pour la protection contre les agents pathogènes ; caractérisée en ce que cette endoenzyme provient d'une source autre qu'un agent pathogène se développant sur ladite récolte coupée et qu'elle est appliquée à la plante en quantité efficace pour inciter la génération du déclencheur in situ en quantité suffisante afin de provoquer la production des agents antipathogènes par ladite plante.

2. Utilisation selon la revendication 1, dans laquelle la endoenzyme comporte une endopolygalacturonase, une lyase pectate, une lyase pectinée, une β-gluconase, une endoglycanase, une endohydrase de carbone, une endolyase, une chitinase ou une chitosanase.

3. Utilisation selon la revendication 2, dans laquelle ledit agent de pénétration comporte un agent tensio-actif, un humectant, une exoenzyme, une cutinase ou une estérase de cire.

4. Utilisation selon l'une des revendications 1 à 3, dans laquelle ledit déclencheur est une oligo-saccharine.

5. Utilisation selon l'une des revendication 1 à 4, dans laquelle ledit composé est appliqué sur la culture avec une composition comportant un tampon.

6. Utilisation selon l'une des revendication 1 à 5, dans laquelle ledit composé est appliqué sur la culture avec une composition comportant 10-1000 µg/ml dudit composé.

7. Utilisation selon l'une des revendications 1 à 6, dans laquelle ladite endoenzyme comporte une endoglycanase.

8. Utilisation selon l'une des revendications 1 à 6, dans laquelle ladite endoenzyme comporte une endohydrase de carbone ou une endolyase.

9. Utilisation selon l'une des revendications 1 à 6, dans laquelle ladite endoenzyme comporte une endopolygalacturonase.

10. Utilisation selon l'une des revendications 1 à 9, dans laquelle ledit composé appliqué sur la culture génère un oligo-saccharide actif à partir des parois cellulaires d'un agent pathogène invasif présent sur la culture, ledit oligo-saccharide entrant en contact avec la plante, afin de produire une réponse antipathogène dans ladite récolte coupée.

11. Utilisation selon la revendication 10, dans laquelle ledit oligo-saccharide actif est une chitosane ou une chitine.

12. Utilisation selon l'une des revendications 1 à 11, dans laquelle ledit composé est appliqué sur la récolte coupée dans une composition comportant un porteur.

13. Composition à appliquer sur la récolte coupée pour la protéger des agents pathogènes, ladite composition comportant (i) un composé capable de générer dans la plante ou dans l'agent pathogène de celle-ci un déclencheur stimulant la plante pour qu'elle synthétise des agents antipathogènes; ledit composé comportant une endoenzyme provenant d'une source autre que ledit agent pathogène se développant sur la culture et sélectionnée du groupe composé de : endopolygalacturonase, lyase pectinée, lyase pectate, β-gluconase, endoglycanase, endohydrase de carbone, endolyase, chitinase et chitosanase, l'endoenzyme étant présente en quantité efficace pour que ledit déclencheur soit généré in situ en quantité suffisante pour provoquer la production d'un agent antipathogène par la plante elle-même et (ii) un agent de pénétration enzymatique capable d'aider ledit composé durant la pénétration dans la couche épidermique de la plante.

14. Composition selon la revendication 13, dans laquelle l'agent de pénétration enzymatique comporte une enzyme sélectionnée parmi les cutinase ou estérase de cire.

15. Composition selon la revendication 14, dans laquelle l'enzyme est de la cutinase.

16. Procédé pour protéger une récolte coupée contre les agents pathogènes comportant l'application d'une composition dont les ingrédients sont :
a) un composé capable de générer sur la plante un déclencheur qui stimule la plante à synthétiser des agents antipathogènes et,
b) un agent de pénétration, capable de traverser la couche épidermique de la plante, lesdits composés comportant une endoenzyme provenant d'une source autre qu'un agent pathogène qui se développe dans la plante et appliquée en quantité suffisante pour inciter la production in situ du déclencheur, en quantité efficace pour générer des agents antipathogènes par la culture elle-même.

17. Procédé selon la revendication 16, dans lequel l'endoenzyme comporte une endopolygalacturonase, une lyase pectate, une lyase pectinée, une β-gluconase, une endoglycanase, une endohydrase de carbone, une endolyase, une chitinase ou une chitosanase.

18. Procédé selon la revendication 16 ou 17, dans lequel ledit agent de pénétration comporte un agent tensio-actif, un humectant, une exoenzyme, une cutinase ou une estérase de cire.

19. Procédé selon l'une des revendications 16 à 18, dans lequel ledit déclencheur est une oligo-saccharine.

20. Procédé selon l'une des revendications 16 à 19, dans lequel ledit composé est appliqué sur la plante dans une composition comportant un tampon.

21. Procédé selon l'une des revendications 16 à 20, dans lequel ledit composé est appliqué sur la plante dans une composition comportant 10-1000 µg/ml dudit composé.

22. Procédé selon l'une des revendications 16 à 21, dans lequel ladite endoenzyme comporte un endoglycanase.

23. Procédé selon l'une des revendications 16 à 22, dans lequel ladite endoenzyme comporte une endohydrase de carbone ou une endolyase.

24. Procédé selon l'une des revendications 16 à 23, dans lequel ladite endoenzyme comporte une endopolygalacturonase.

25. Procédé selon l'une des revendications 16 à 24, dans lequel ledit composé appliqué sur la récolte coupée génère un oligo-saccharide actif à partir des parois cellulaires d'un agent pathogène invasif présent sur la culture, ledit oligo-saccharide entrant en contact avec la plante, afin de produire une réponse antipathogène dans la culture.

26. Procédé selon la revendication 24, dans lequel ledit oligo-saccharide actif est une chitosane ou une chitine.

27. Procédé selon l'une des revendications 16 à 23, dans lequel ledit composé est appliqué sur la récolte coupée dans une composition comportant un porteur.
